(19) Europäisches Patentamt
European Patent Office
Office européen des brevets

(11) **EP 2 955 991 B1**

(12) **EUROPEAN PATENT SPECIFICATION**

(45) Date of publication and mention
of the grant of the patent:
**10.10.2018 Bulletin 2018/41**

(21) Application number: **14751785.8**

(22) Date of filing: **13.02.2014**

(51) Int Cl.:
***A01D 34/42*** *(2006.01)*

(86) International application number:
**PCT/US2014/016319**

(87) International publication number:
**WO 2014/127166 (21.08.2014 Gazette 2014/34)**

(54) **HORIZONTAL ROTARY MOWER**

HORIZONTALER KREISELMÄHER

TONDEUSE À ROTATION HORIZONTALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2013 US 201313768856**

(43) Date of publication of application:
**23.12.2015 Bulletin 2015/52**

(73) Proprietor: HRM Enterprises Inc.
**Westerly, RI 02891 (US)**

(72) Inventor: **ZERBARINI, Richard**
**Westerly, RI 02891 (US)**

(74) Representative: **Somervell, Thomas Richard**
**Marks & Clerk LLP**
**Alpha Tower**
**Suffolk Street**
**Queensway**
**Birmingham B1 1TT (GB)**

(56) References cited:
**US-A- 2 734 328    US-A- 2 979 879**
**US-A- 5 899 052    US-B2- 7 121 071**

**Description**

FIELD OF THE INVENTION

The present invention is directed generally toward lawnmowers and more particularly to lawnmower blades and blade housings.

BACKGROUND OF THE INVENTION

Lawnmowers traditionally come in two varieties: rotary mowers, where blades rotate horizontally in a plane; and reel mowers, where helical blades rotate about an axis so that the helical blades can shear grass against a bedknife.
Rotary mowers have blades with a small cutting area, and the blades require very fast tip speeds to perform well. Typical tip speeds are greater than fifteen thousand feet per minute to achieve an acceptable cut, even when blades are sharp. Foreign objects struck by blades at these velocities can be very dangerous. Even though rotary mower decks and collection bags must be designed in accordance with various safety standards to minimize the risk of injury due to flying objects, many injuries still occur from ejected objects even when safety measures are in place.
In addition, many injuries occur from the blades themselves. Rotary mower blades are very large and heavy and will inflict grievous injury even at low speeds. Furthermore, decks for these blades are completely open underneath to accommodate the circular cut area and the need for the blades to cut at their tips. This large, open area increases the risk of foot, hand, or other body part mutilation, and increases the risk of the blades striking a foreign object.
Reel mowers have multiple helical blades (usually five) that rotate about a horizontal shaft; a stationary bedknife provides a shearing surface for the helical blades. The rotating helical blades of a reel mower typically operate at a lower speed than the blades of a rotary mower, but reel mowers are precision instruments that require frequent adjustment and precise operating conditions such as rotational speed and forward velocity. Reel mowers are also dangerous. Reel mowers must expose the entire front of the rotating helical blades to allow the blades to feed grass against a bedknife. Even while not in operation the helical blades may cause injury. In operation, accidental contact with a spinning helical blade will pull a hand or foot into the bedknife. Reel mowers, such as disclosed in US-A-2734328, include multi-rotor blade assemblies with blade oriented in the direction of rotation to operate without a bedknife, but such devices have limited service life because of their fixed blades and configuration of the blade assembly that inhibits clipping flow.
Consequently, there is a need for a mower with a shielded and less exposed blade assembly to reduce the risk of injury.
Typical rotary lawn mower blades are generally heavy, flat elongated pieces of steel that rotate symmetrically about a rotatable vertical shaft. Rotary lawn mower blades have a sharpened leading edge, and the outer portion of the trailing edge is curved to create an airflow to lift grass and blow clippings into a bag or out of a discharge passage. The leading edge becomes dull very quickly. When the leading edge is dull, even though the blade appears to be cutting, the blade is actually smashing and tearing grass. Smashing and tearing causes bruised grass with ragged, torn edges. Damaged grass develops brown, unpleasant looking tips, and is more susceptible to disease. Reel mowers traditionally provide a clean cut through a shearing action. Reel mower blades still have to be sharp to perform well.
Rotary and reel mowers also suffer from issue related to maintenance. Wear on mower blades, either due to ordinary use or damage from foreign objects, requires them to be sharpened or replaced regularly. Replacing the blades in lieu of sharpening can be expensive.
To sharpen rotary mower blades, they generally must be removed from the power train. Because rotary mower blades are usually located under a mower deck, removing them is often a difficult, time consuming task. It is especially difficult on larger riding type mowers because the mowers are very heavy; removing blades may require ramps, a hoist or a jack to gain access. Reel mower blades cannot typically be sharpened without special sharpening equipment or the assistance of a professional and reference to a table of reel and bedknife grinding guidelines. Consequently, there is a need for a low cost disposable alternative that is easier to replace and alleviates the need for sharpening.

SUMMARY OF THE INVENTION

Accordingly, the present invention is directed to a novel lawn mowing apparatus with a shielded blade assembly, configured to use very sharp, inexpensive disposable blades.
In one embodiment of the present invention, a lawnmower blade assembly is configured to hold several replaceable blades. The blade assembly rotates about an axis parallel to the ground. Blades are held by the blade assembly with the cutting edge of each blade oriented in the direction of rotation. As the assembly rotates, the blades cut grass directly beneath the blade assembly.
In another embodiment of the present invention, a blade assembly guard conceals blades held in a rotating blade assembly. Blades are only exposed during periods when they are near the ground and may be effective to cut grass.

In another embodiment of the present invention, replaceable lawnmower blades are configured to be held in a blade assembly. The replaceable blades are held in such a way as to orient the cutting edge of each blade in the direction of assembly rotation.

It is to be understood that both the foregoing general description and the following detailed description are exemplary and explanatory only and are not restrictive of the invention claimed. The accompanying drawings, which are incorporated in and constitute a part of the specification, illustrate an embodiment of the invention and together with the general description, serve to explain the principles.

BRIEF DESCRIPTION OF THE DRAWINGS

The numerous advantages of the present invention may be better understood by those skilled in the art by reference to the accompanying figures in which:

FIG. 1 shows a perspective view of a push type lawnmower with a blade assembly guard according to at least one embodiment of the present invention;

FIG. 2 shows a perspective, exploded view of the push type lawnmower shown in FIG. 1, having a blade assembly according to at least one embodiment of the present invention;

FIG. 3 shows a perspective view of a blade assembly according to at least one embodiment of the present invention;

FIG. 4 shows a perspective, close-up view of a portion of the blade assembly shown in FIG. 3;

FIG. 5 shows a perspective view of a blade and blade clamp according to at least one embodiment of the present invention;

FIG. 6 shows a perspective view of the blade and blade clamp shown in FIG. 5, where the blade is inserted into the blade clamp;

FIG. 7 shows a side view of a blade assembly configured for three blades;

FIG. 8 shows a side view of a blade assembly configured for five blades;

FIG. 9 shows a side, cutout view of a push type lawnmower according to at least one embodiment of the present invention;

FIG. 10 shows a perspective, bottom view of a push type lawnmower according to at least one embodiment of the present invention having a restricted blade opening;

FIG. 11 shows a side, cutout, environmental view of a lawnmower according to at least one embodiment of the present invention illustrating grass cutting and clipping flow;

FIG. 12 shows a side, close-up, environmental view of a blade assembly illustrating how grass is cut as the blade assembly rotates;

FIG. 13 shows a perspective view of riding type lawnmower according to at least one embodiment of the present invention;

FIG. 14 shows a perspective view of a commercial mower deck according to at least one embodiment of the present invention pulled behind a tractor;

FIG. 15 shows a side, cross-sectional view of a rotor according to at least one embodiment of the present invention;

FIG. 16 shows a side, cross-sectional view of a housing and rotor according to at least one embodiment of the present invention;

FIG. 17 shows a side, diagrammatic view of a housing and rotor according to at least one embodiment of the present invention;

FIG. 18 shows a perspective, cross-sectional view of a housing and rotor according to at least one embodiment of the present invention; and

FIG. 19 shows a perspective, cross-sectional view of a housing and rotor according to at least one embodiment of the present invention.

DETAILED DESCRIPTION OF THE INVENTION

Reference will now be made in detail to the subject matter disclosed, which is illustrated in the accompanying drawings. The scope of the invention is limited only by the claims; numerous alternatives, modifications and equivalents are encompassed. For the purpose of clarity, technical material that is known in the technical fields related to the embodiments has not been described in detail to avoid unnecessarily obscuring the description.

In at least one embodiment of the present invention, a lawnmower utilizes a horizontally rotating blade assembly with the cutting edge of each blade in the blade assembly facing in the direction of rotation. Blades in the blade assembly are thin and have an edge geometry that is at a small angle; therefore, the blades continue to work effectively longer than blades in prior art lawnmowers and produce a far superior cut. Because of the orientation of the blade assembly, the sharpness of the blade edge and the configuration of blades in the blade assembly, the blade assembly may operate at a lower, safer speed as compared to rotary lawnmowers and the blade assembly does not require a stationary straight blade (bedknife) or an open front like a reel mower. The blade assembly may also be largely contained within a blade assembly guard to prevent accidental contact with blades.

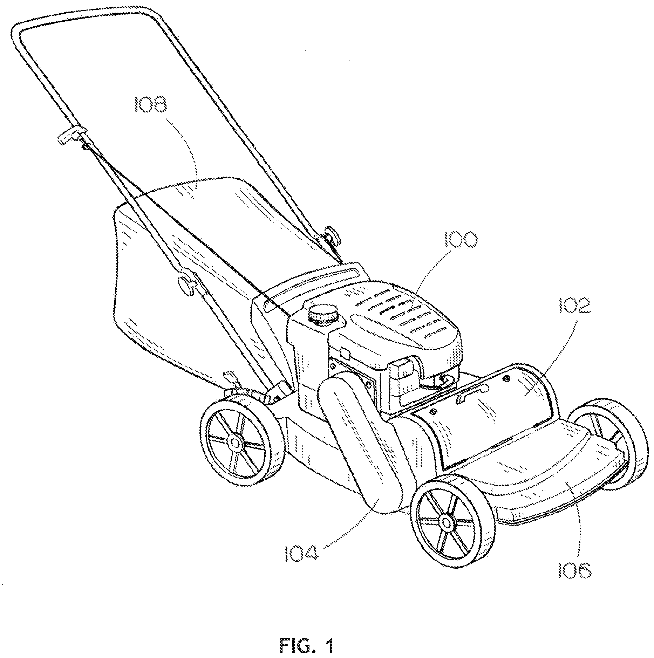

Referring to FIG. 1, a perspective view of a push type lawnmower with a blade assembly guard according to at least one embodiment of the present invention is shown. The lawnmower includes a drive mechanism 100 such as a gasoline or electric motor. The drive mechanism 100 powers the rotation of a blade assembly (here concealed by a blade assembly guard 106). The drive mechanism 100 may engage the blade assembly through some type of drive train such as a belt or power take-off (here concealed by a drive shield 104). The lawnmower may also include a clippings bag 108 to collect and dispose of clipping generated by the blade assembly.

Replacement or maintenance of blades in the blade assembly may be facilitated by a blade assembly access panel 102 located on the easily accessible portion of the blade assembly guard 106. By contrast, rotary mower blade maintenance must be accomplished by either tipping the mower deck on its side for smaller units or from below for larger mowers.

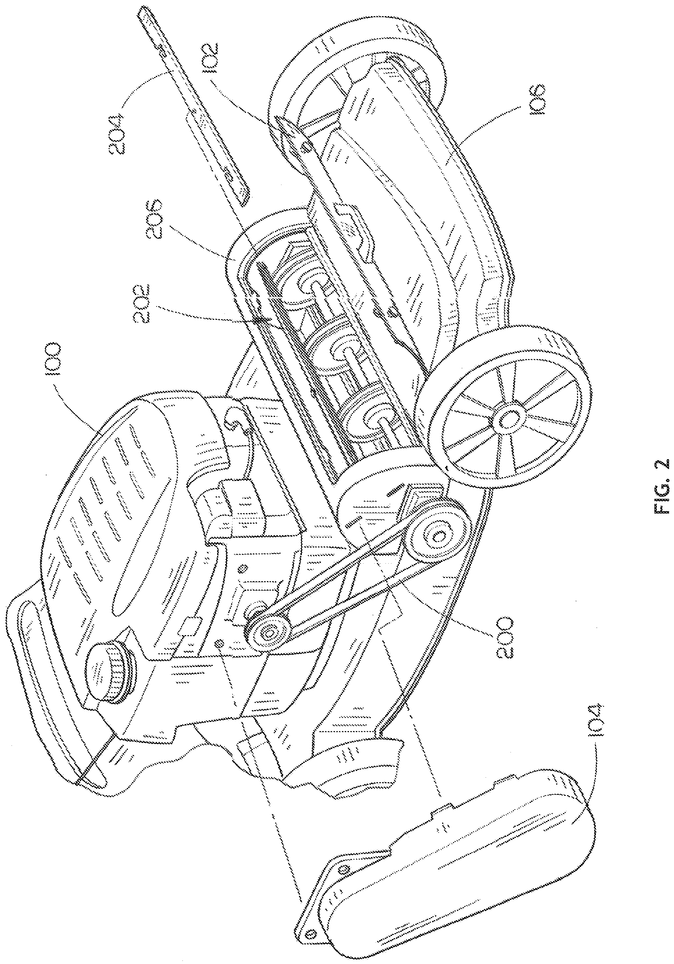

Referring to FIG. 2, a perspective, exploded view of the push type lawnmower shown in FIG. 1, having a blade assembly according to at least one embodiment of the present invention is shown. The drive mechanism 100 is connected to a blade assembly 202 by a transfer belt 200. The transfer belt 200 may be covered by a drive shield 104 to prevent injuries due to contact with the transfer belt 200 and to protect the integrity of the transfer belt 200 during operation.

The blade assembly 202 may be covered by a blade assembly guard 106 that prevents exposure of blades 204 in the blade assembly 202 except as necessary for grass cutting as more fully described herein. The blade assembly guard 106 may also function as a superstructure for the lawnmower (like a traditional mower deck), creating a sufficient wheelbase for even mowing. The blade assembly guard 106 may include a ducting portion 206 to closely surround the blade assembly 202 and produce suction and/or maintain an airflow produced by the blade assembly 202 during operation to direct grass clippings.

The blade assembly guard 106 may include a blade assembly access panel 102 to access the blade assembly 202 for maintenance and replacement of blades 204. In at least one embodiment, a horizontal blade 204 arrangement in the blade assembly 202 allows access from above. A blade assembly access panel 102 may allow blades to be replaced quickly.

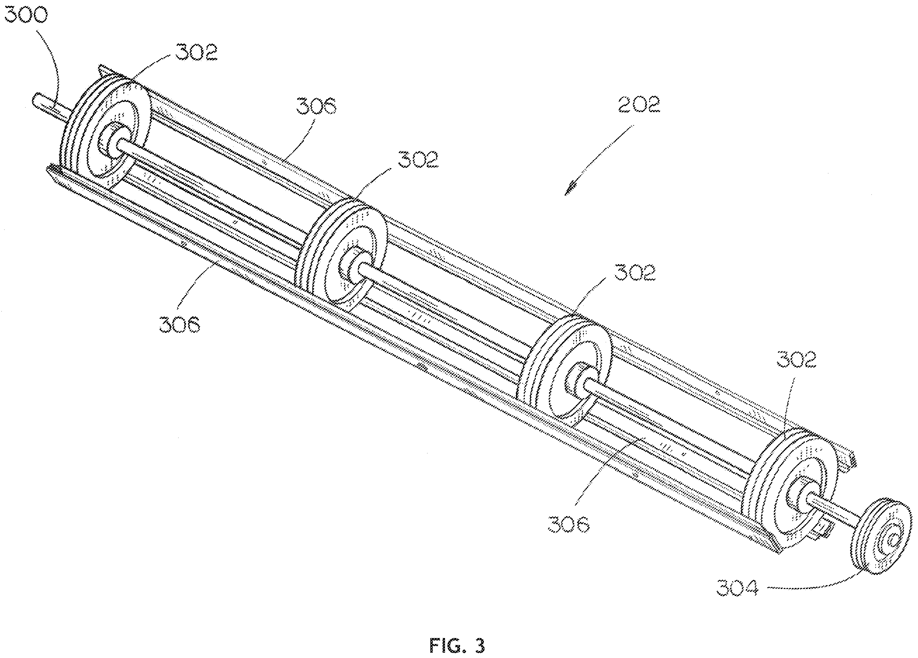

Referring to FIG. 3, a perspective view of a blade assembly 202 according to at least one embodiment of the present invention is shown. The blade assembly 202 may include a shaft 300 connected to a rotor 302 or a plurality of rotors 302. The rotors 302 provide attachment surfaces for a plurality of blade clamps 306. Each blade clamp 306 is configured to hold a blade such that the cutting edge of the blade faces the direction of rotation of the blade assembly 202 when the blade assembly 202 is in operation. While FIG. 3 illustrates a plurality of blade clamps 306, other blade holding elements may be used to implement embodiments of the present invention. The blade assembly 202 may also include a drive engaging mechanism 304 to facilitate a connection between the shaft 300 and a drive mechanism; for example, the drive engaging mechanism 304 may be direct, torque converter, gear, transmission or belt wheel to receive a drive belt connected to a motor.

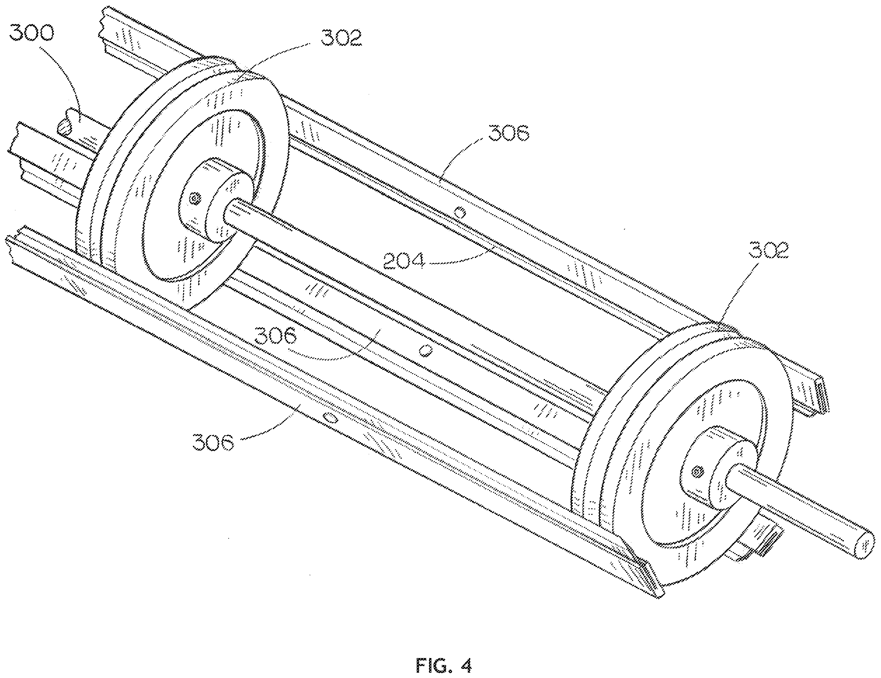

Referring to FIG. 4, a perspective, close-up view of a portion of the blade assembly shown in FIG. 3 is shown. In one embodiment, a shaft 300 connected to two rotors 302 spins the rotors 302 about an axis defined by the shaft 300. Blade clamps 306 connected to the rotors 302 thereby rotate about an axis defined by the shaft 300. In other embodiments, the blade assembly 202 may be shaftless. Each blade clamp 306 is configured to hold a blade 204 such that the cutting edge of each blade 204 faces the direction of rotation during normal operation.

As described more fully herein, a blade assembly according to the present invention allows for inexpensive, replaceable blades 204. Whereas the blades of prior art rotary mowers are required to have certain characteristics of mass and ductility based on their mode of operation and tip speed to meet certain safety standards and testing requirements, blades 204 according to at least one embodiment of the present invention essentially comprise only a cutting edge. Blade 204 edges according to at least one embodiment of the present invention are harder and sharper than prior art blades.

Mower blades must conform to a blade ductility test defined in ANSI/ASAE S483 and mowers generally must conform to mower safety specifications defined in ANSI/OPEI B71.1-2012. Satisfying these tests generally requires blades of a particular ductility, such as a Rockwell hardness less than 40.

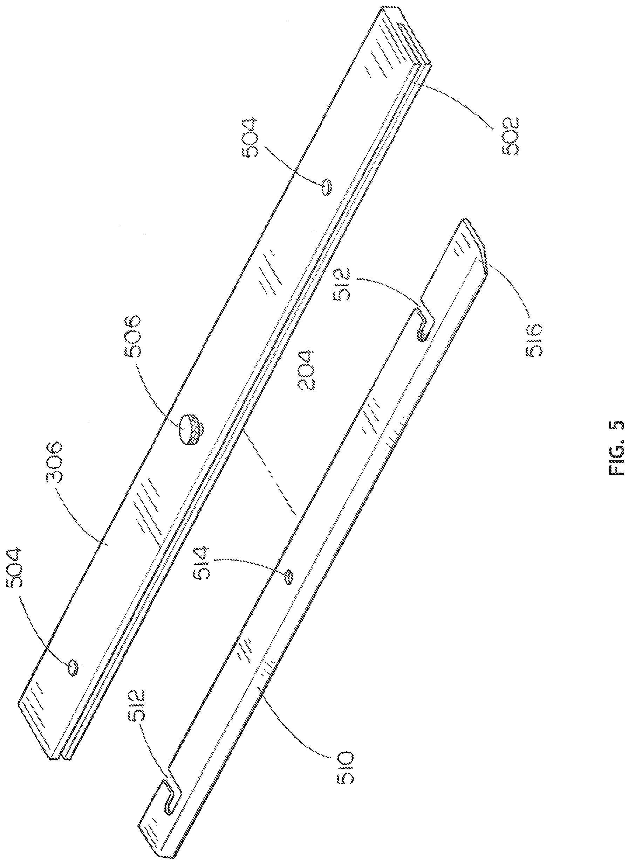

Referring to FIG. 5, a perspective view of a blade 204 and blade clamp 306 according to at least one embodiment of the present invention is shown. A blade clamp 306 defines a blade channel 502 to hold and orient a blade 204 in a blade assembly. The blade clamp 306 may include one or more locking pins 504 and one or more locking screws 506. While locking pins 504 and locking screws 506 are specifically described and shown, other fastening or clamping mechanisms suitable for retaining blades 204 in the blade channel 502 may be used. Locking pins 504 engage locking pin grooves 512 in a blade 204 and help ensure the blade 204 is oriented and positioned correctly in the blade clamp 306. Locking screws 506 may engage a threaded portion of a blade 204 or pass through a locking screw hole 514 in a blade 204 and engage a threaded portion (not shown) of the blade clamp 306. Locking screws 506 ensure that the blade 204 is secure in the blade clamp 306 and remains in the correct orientation.

Because blades 204 according to at least one embodiment of the present invention are harder and sharper than prior art blades, they may operate at lower speeds, in the range of 304.8 to 1981.2 meters (one thousand to sixty-five hundred feet per minute). In one embodiment, a shaft driving a blade assembly rotates at an angular velocity of between one thousand and five thousand rotations per minute. Where a blade assembly has a diameter of 12.7 centimeters (five inches), such angular velocity may translate to a linear blade tip velocity of 304.8 to 1981.2 meters (one thousand to sixty-five hundred feet) per minute. The ANSI limit for mower blade tip speed is is 5791.2 meters (nineteen thousand feet) per minute.

In one exemplary embodiment, the blades 204 travel at approximately 1889.76 meters (sixty-two hundred feet) per minute. Where a blade assembly has a diameter of 13.335 centimeters (5.25 inches), a horizontal rotary mower motor would operate at approximately seventeen hundred rotations per minute. A motor turning at seventeen hundred rotations per minute with a 13.335 centimeter (5.25 inch) engine drive pulley driving a blade assembly with a 5.08 centimeter (2.00 inch) drive engaging mechanism will drive the blades 204 at approximately 1889.76 meters (sixty-two hundred feet) per minute (with the blade assembly rotating at forty-five hundred rotations per minute). Seventeen hundred rotations per minute is a fast idle for most internal combustion four-cycle mower engines and easily and efficiently obtainable by electric motors.

Such an exemplary embodiment of the present invention has approximately one-third (1/3) the blade tip speed of a common rotary mower (5791.2 meter or nineteen thousand feet per minute ANSI limit). A common rotary mower with a vertical engine directly driving a 53.34 centimeter (twenty-one inch) blade must turn at approximately thirty-three hundred rotations per minute (near some engines maximum operating limit of four thousand rotations per minute) to produce a blade tip speed of approximately 5486.4 meter (eighteen thousand feet) per minute. At such engine and blade tip speeds, common rotary mowers produce significant noise and air pollution (ninety dB and as much hydrocarbons and nitrogen oxides as four cars driven for the same length of time).

Furthermore, because the blades 204 are inserted into a blade clamp 306, they are easily replaceable. For example, in at least one embodiment, the blades 204 are modified utility knife blades or band saw blades. Such blades 204 may include one or more locking pin grooves 512 and one or more locking screw holes 514 depending on the corresponding blade clamp 306. Blades 204 may also have truncated edge tips 516 at each end of the blade 204 for safety as sharp cutting points are not necessary. In at least one embodiment of the present invention, where a locking screw 506 is operable by hand, blades 204 are replaceable without any tools.

Lawn mower blades are typically manufactured from mild steel. Premium blades are sometimes manufactured from 1080 steel. Generally, rotary mower blades are from 15.24 to 81.28 centimeters (six to thirty-two inches) in length with most modern rotary mowers having a 53.34 centimeter (twenty-one inch) blade; they are typically 3.81 to 10.795 centimeters (1.5 to 4.25 inches) wide and at least 0.254 centimeters (0.1 inches) thick with most being 0.8382 centimeters (one third of an inch thick) or more.

To adequately cut, rotary blades require a high tip speed, in the range of 4572 to 5791.2 meters (fifteen to nineteen thousand feet) per minute. Because of the high tip speed, rotary blades must be made from heavy gage, soft, ductile steel to meet ANSI test standards and other safety requirements. Hardness is the primary factor that affects blade sharpness retention, so sharpness of rotary blades degrades quickly because they must be made of ductile steel (typically less than Rockwell C 40 steel). Typically rotary blades are used for a season or more and are sharpened multiple times during their useful life. Sharpening is not technically difficult but takes time; and if rotary blades are not sharpened regularly, cut quality suffers.

At least one embodiment of the present invention may use blades 204 similar to band saw blades, razor blades or utility knife blades. The manufacture of thin or stamped blades such as band saw blades, razor blades and utility knife blades involves a sequence of processes, each of which is used to achieve a certain characteristic of the blade 204. In the manufacture of band saw blades, razor blades and utility knife blades, it is common to employ a single band of steel, in coil form, with hardness in the range of Rockwell B 80 for razor blades and utility knife blades, and in the range of Rockwell C 30 to C 50 for band saw blades.

During the manufacture of razor blades and utility knife blades, the single band of steel is fed into a punch press to shape the blade, score lines to define the edges of the blade, remove excess material and stamp openings to define attach points employed to retain the blade. Score lines typically correspond to a side edge of the razor blade or utility knife blade and define the breaking line for later snapping or cutting the scored strip into a plurality of individual razor blades or utility knife blades. The punch press may further stamp a brand name or logo onto the blade 204.

The single band of steel is then fed through a heat-treating oven to harden and temper the material. The heat-treated band is conventionally ground, honed and/or stropped to form the facets defining a straight cutting edge along one side. The band is subsequently snapped at each score line to produce a plurality of razor blades or utility knife blades.

During the manufacture of band saw blades, the single band of steel is conventionally ground, honed and/or stropped to form the facets defining a straight cutting edge along one side and then fed through a heat-treating oven to harden the cutting edge. When a sharper edge is required, the band may be heat-treated and then ground to a cutting edge. The band is then sheared to length to produce a plurality of band saw blades that are each welded into loops.

Conventional metallurgical opinion suggests that a ductile to brittle transition occurs in 1095 carbon steel at room temperature when the hardness exceeds Rockwell C 50. Hardness in excess of Rockwell C 50 increases the wear resistance or dulling of a cutting edge proportional to the maximum theoretical hardness that the material is capable of achieving; or approximately Rockwell C 66 for 1095 carbon steel. For blades 204 manufactured according to such processes, resistance to fracture and fragmentation diminishes with each increase in hardness in excess of Rockwell C 50.

The surfaces of the cutting edge of blades 204 manufactured according to such processes may be coated with either a metallurgically bonded material of a topical mechanically bonded coating designed to enhance the sharpness and edge retention of the blade 204, as well as reduce adhesion of foreign particulate matter such as grass clippings, and improve the appearance of the blade 204. Properly executed processes should not adversely affect the core hardness and microstructure of the blade material, and thereby insure adequate ductility and impact resistance to conform to all relevant ANSI standards for both mower blades and utility knife blades, and to limit any breakage or chipping to micro-chips in a coating.

Because blades 204 in embodiments of the present invention operate at lower tip speed (between 609.6 and 1981.2 meters or two thousand and sixty-five hundred feet per minute in some embodiments of the present invention as compared to 5791.2 meters or nineteen thousand feet per minute in prior art mowers) the power source driving the blades 204 may be less powerful, operate more efficiently and operate at significantly lower engine speed. Less powerful, more efficient power sources may be lighter and more environmentally friendly as compared to motors used in prior art mowers.

Reel mowers use hardened helical blades but because of the type of cutting action (shearing) they require a technically difficult and time-consuming process to sharpen the blades and adjust the blade alignment. That process usually requires a trained professional.

Blades 204 according to at least one embodiment of the present invention may be manufactured using a very cost effective process similar to the manufacture of utility knife blades and band saw blades. In at least one embodiment of the present invention, blades 204 are_made of 1095 grade carbon steel.

Blades 204 useful in embodiments of the present invention have a hard cutting edge 510 but are ductile otherwise so that the blade 204 will bend and not break if it strikes a foreign object (ANSI S483). To harden the cutting edge 510, the process should achieve a hardness of Rockwell C 60 or greater to a depth of 0.00762 to 0.01016 centimeters (0.003 to 0.004 inches) in from the cutting edge 510. A cutting edge with hardness between Rockwell C 55 and Rockwell C 60 also has some edge retention capabilities and may be sharpened using conventional methods. The edge sharpness retention capability increases and the sharpening difficulty also increases from Rockwell C 55 to Rockwell C 60. Above Rockwell C 60 edge retention is excellent but sharpening is very difficult. The hardness would transition back to the soft material at around 0.0381 centimeters (0.015 inches) in from the cutting edge 510. In at least one embodiment, the blade 204 are also be treated for corrosion resistance.

At least one embodiment of the present invention includes a method for producing a micro-hardened cutting edge 510 on a soft blade 204 body where the cutting edge 510 comprises less than 0.0508 centimeters (0.020 inches) of the blade 204. The method may include induction heat-treating; Boronizing; Nitriding; flame spray alloy processing, Electroless Nickel/Teflon infusion; laser cladding; Ferritic Nitro Carburizing; applying a Graphene based material, a carbide impregnated material, a diamond impregnated material or a composite material to the cutting edge 510; and coating the blade 204 with a material to produce a hardened surface, particularly focused on the cutting edge 510.

Blades 204 according to at least one embodiment of the present invention retain a soft body with a hardness below Rockwell C 50 and in some embodiments below Rockwell C 35. Only a very small portion of each blade 204 (less than 0.0381 centimeters or 0.015 inches) defining a cutting edge 510 would be hardened. In an exemplary embodiment, blade 204 hardness transitions (hard/brittle to soft/ductile) from the cutting edge to the 0.0381 centimeter (0.015 inch) region. Such a blade 204 offers a cutting edge 510 with exceptional sharpness retention but will bend instead of break or fracture under common mowing stresses. Only micro-chipping at the cutting edge 510 will occur upon severe impact with hard objects. Such chipping is normal for all blades and within ANSI standards.

Rotary mower blades do not exceed a hardness of Rockwell C 50 and are mostly in the mid to upper Rockwell C 30's. Above Rockwell C 50, steel will become brittle enough to fracture or break instead of bending or deforming. Material with a hardness of less than Rockwell C 50 will not retain an edge. A hardness above Rockwell C 60 is desirable for sharpness retention, but a blade that hard would be difficult if not impossible to sharpen by normal means and may require diamond grit stones. The disposable blades 204 of the present invention solve this problem.

Blades 204 according to at least one embodiment of the present invention retain a soft body with a hardness below Rockwell C 50 and in some embodiments below Rockwell C 35. Only a very small portion of each blade 204 (less than 0.0381 centimeters or 0.015 inches) defining a cutting edge 510 is preferably hardened. In this exemplary embodiment, blade 204 hardness transitions (hard/brittle to soft/ductile) from the cutting edge to approximately the 0.0381 centimeter (0.015 inch) region. Such blade 204 provides a cutting edge 510 with exceptional sharpness retention but the blade 204 will bend instead of break or fracture. Only tiny micro-chipping on the cutting edge 510 will occur upon severe impacts to hard objects. Such chipping is normal for all blades and acceptable within ANSI standards.

Methods for producing a micro-hardened cutting edge 510 on a soft blade 204 body (less than 0.0508 centimeters or 0.020 inches hardened) include: induction heat treating; Boronizing; Nitriding; Flame Spray Alloy Process; Electroless Nickel/Teflon Infusion; Laser Cladding; Ferritic Nitro Carburizing; applying a Graphene based material to the cutting edge 510; applying a Graphene based material, a carbide impregnated material, a diamond impregnated material or a composite material to the cutting edge 510; and coating the blade 204 with a material to produce a hardened surface mostly on the cutting edge 510.

Blades 204 according to at least one embodiment of the present invention could be useful in rotary type mowers. The advantages provided by a micro-hardened cutting edge may translate and meet rotary mower safety standard test requirements.

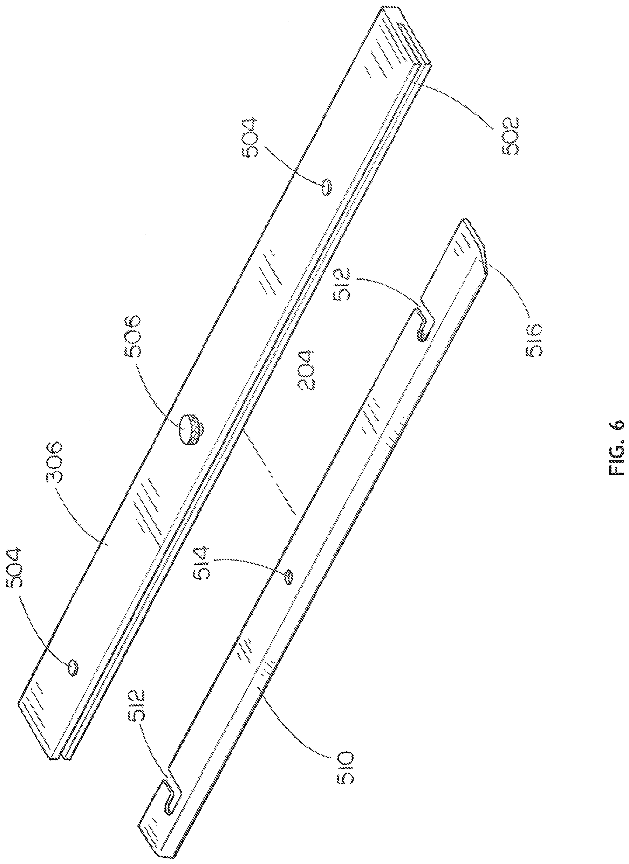

Referring to FIG. 6, a perspective view of the blade 204 and blade clamp 306 shown in FIG. 5, where the blade 204 is inserted into the blade clamp 306, is shown. The blade 204 is inserted into the blade groove 502 defined by the blade clamp 306. Locking pins 504 engage locking pin grooves (obscured) defined by the blade 204 to orient the blade 204 and ensure the blade 204 is positioned and oriented correctly with the cutting edge 510 facing out. A locking screw 506 secures the blade 204 in place. The blade 204 may have truncated tips 516 on each end for safety.

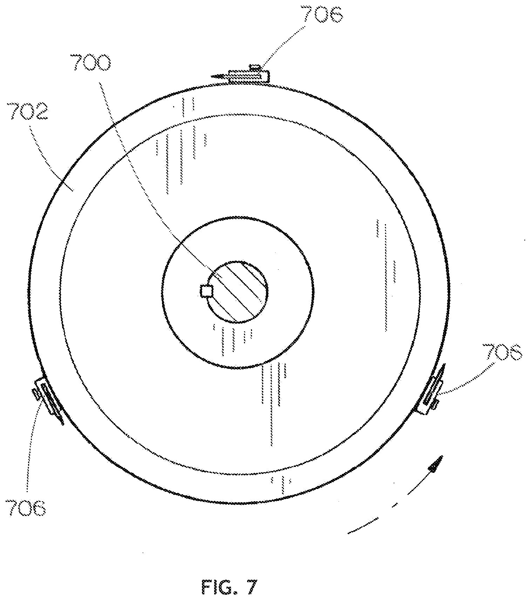

Referring to FIG. 7, a side view of a blade assembly configured for three blades is shown. In at least one embodiment of the present invention, one or more rotors 702 are attached to a shaft 700. Three blade clamps 706 and corresponding blades are attached to the one or more rotors 702 such that the blades are oriented with the cutting edge of each blade facing in the direction of rotation. For example, in FIG. 7, as the shaft 700 rotates counter-clockwise, the rotors 702 are turned counter-clockwise and the blade clamps 706 and blades travel along a trajectory defined by the perimeter of the one or more rotors 702. Where a portion of grass crosses a blade cutting edge, such portion of grass would be cut.

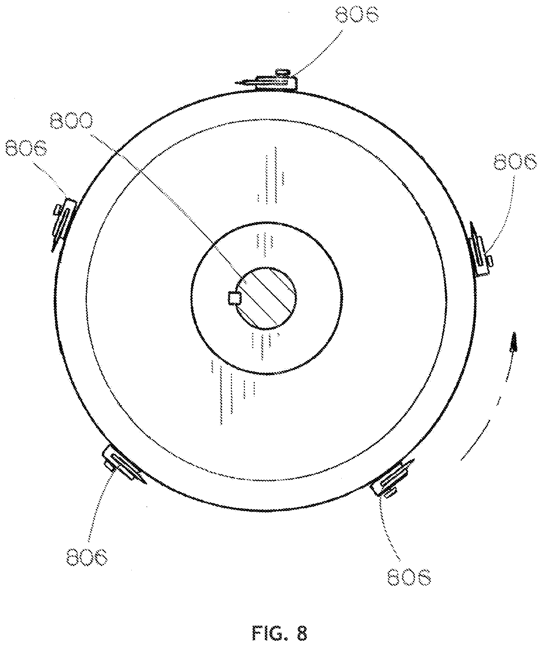

Referring to FIG. 8, a side view of a blade assembly configured for five blades is shown. In at least one embodiment of the present invention, one or more rotors 802 are attached to a shaft 800. Five blade clamps 806 and corresponding blades are attached to the one or more rotors 802 such that the blades are oriented with the cutting edge of each blade facing in the direction of rotation. For example, in FIG. 8, as the shaft 800 rotates counter-clockwise, the rotors 802 are turned counter-clockwise and the blade clamps 806 and blades travel along a trajectory defined by the perimeter of the one or more rotors 802. Where a portion of grass crosses a blade cutting edge, such portion of grass would be cut.

For any number of blade clamps 706, 806 in a blade assembly, the blade clamps 706, 806 should be distributed such that the mass of blade clamps 706, 806 and blades is evenly distributed about an axis of rotation defined by the blade assembly 202.

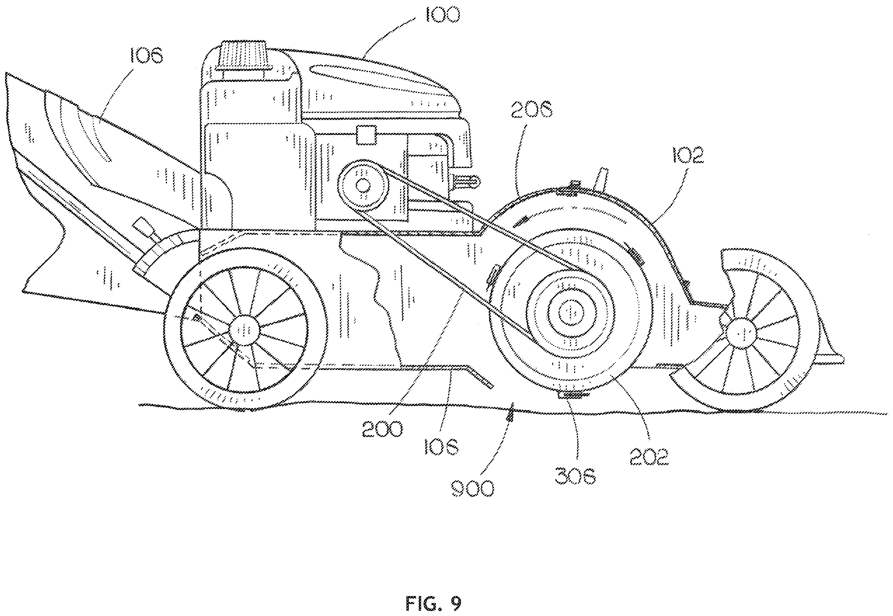

Referring to FIG. 9, a side, cutout view of a push type lawnmower according to at least one embodiment of the present invention is shown. In at least one embodiment of the present invention, a lawnmower includes a drive mechanism 100 connected to a blade assembly 202 by a transfer belt 200. The blade assembly 202 may be contained within a blade assembly guard 106. The blade assembly guard 106 may include a ducting portion 206 closely surrounding the blade assembly 202, configured to maintain and direct an airflow produced by the rotation of the blade assembly 202 to direct grass clippings toward a clippings bag 108. The ducting portion 206 may include a blade assembly access panel 102 to allow easy replacement of blades.

The blade assembly guard 106 may also define a blade opening 900 in a portion of the blade assembly guard 106 proximal to the ground. The blade opening 900 allows blades in blade clamps 306 attached to the blade assembly 202 access to grass beneath the blade assembly guard 106. In at least one embodiment, the blade opening 900 is no larger than the diameter of the blade assembly 202. In some embodiments, the dimensions of the blade opening 900 defined so as to allow sufficient clearance for blades and blade clamps 306. In other embodiments the dimensions of the blade opening 900 is_defined so as to manipulate airflow.

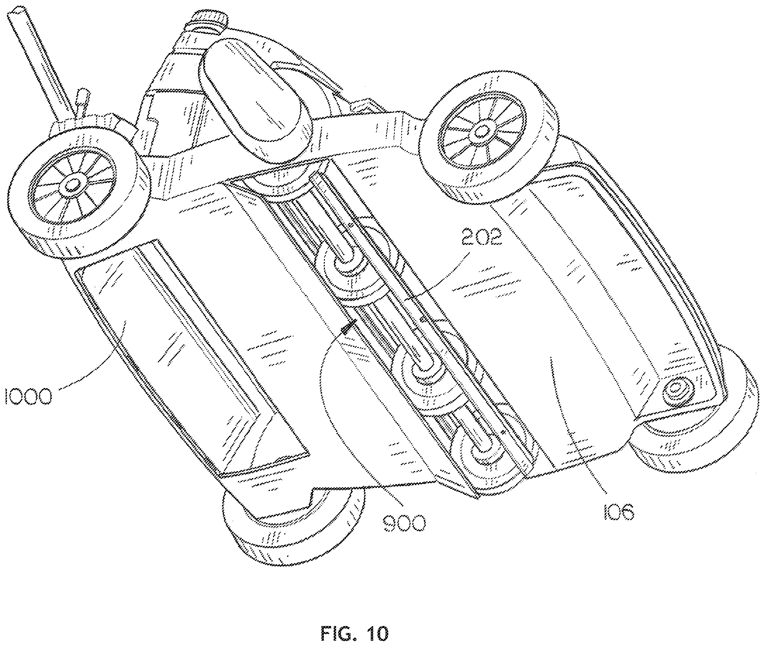

Referring to FIG. 10, a perspective, bottom view of a push type lawnmower according to at least one embodiment of the present invention having a restricted blade opening 900 is shown. A lawnmower with a blade assembly 202 according to the present invention has_a blade assembly guard 106 to surround the blade assembly 202 and prevent injuries. Because the blade assembly 202 only ever mows a small area of ground at any given moment, the blade assembly guard 106 restricts access to the blade assembly 202 except in the vicinity of the small area of ground being mowed. The blade assembly guard 106 may also include a clipping access panel 1000. The clipping access panel 1000 may allow access to an interior portion of the blade assembly guard 106 to remove grass clippings that were not expelled to a clippings bag; or the clipping access panel 1000 may allow mulched grass clippings to be expelled in a lawnmower without a clippings bag.

A lawnmower according to the present invention may not require the front of the blade assembly 202 to be exposed to grass. The exposed area of the blade opening 900 under the blade assembly guard 106 is significantly reduced as compared to a rotary blade mower and can easily be located farther from critical front and rear edges. By placing the blade opening 900 farther from the front and rear of the blade assembly guard 106 and keeping the front of the blade assembly 202 shielded, the risk of a blade coming into contact with a body part is reduced. The reduction in operating speed necessary for blades according to embodiments of the present invention also reduces the risk of injury from foreign objects.

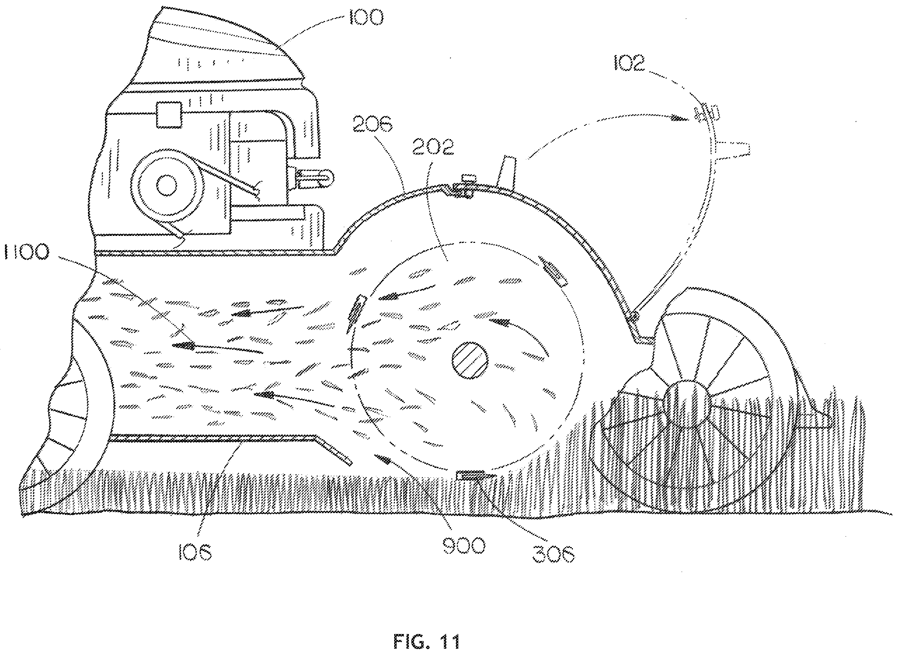

Referring to FIG. 11, a side, cutout, environmental view of a lawnmower according to at least one embodiment of the present invention illustrating grass cutting and clipping flow is shown. In at least one embodiment of the present invention, a lawnmower includes a drive mechanism 100 connected to a blade assembly 202. The blade assembly 202 may be contained within a blade assembly guard 106. The blade assembly guard 106 may include a ducting portion 206 closely surrounding the blade assembly 202, configured to maintain and direct an airflow 1100 produced by the rotation of the blade assembly 202 to direct grass clippings toward a clippings bag or an opening where mulched grass clippings may be ejected. Whereas directing grass clippings in a rotary mower is inherently difficult, requiring complex deck and blade design, the blade assembly 202 rotation produces a natural lift. The ducting portion 206 may include a blade assembly access panel 102 to allow easy replacement of blades.

The blade assembly guard 106 may also-define a blade opening 900 in a portion of the blade assembly guard 106 proximal to the ground. The blade opening 900 allows blades in blade clamps 306 attached to the blade assembly 202 access to grass beneath the blade assembly guard 106. In at least one embodiment, the blade opening 900 is no larger than the diameter of the blade assembly 202. In some embodiments, the dimensions of the blade opening 900 are defined so as to allow sufficient clearance for blades and blade clamps 306. In other embodiments the dimensions of the blade opening 900 are_defined so as to manipulate airflow 1100.

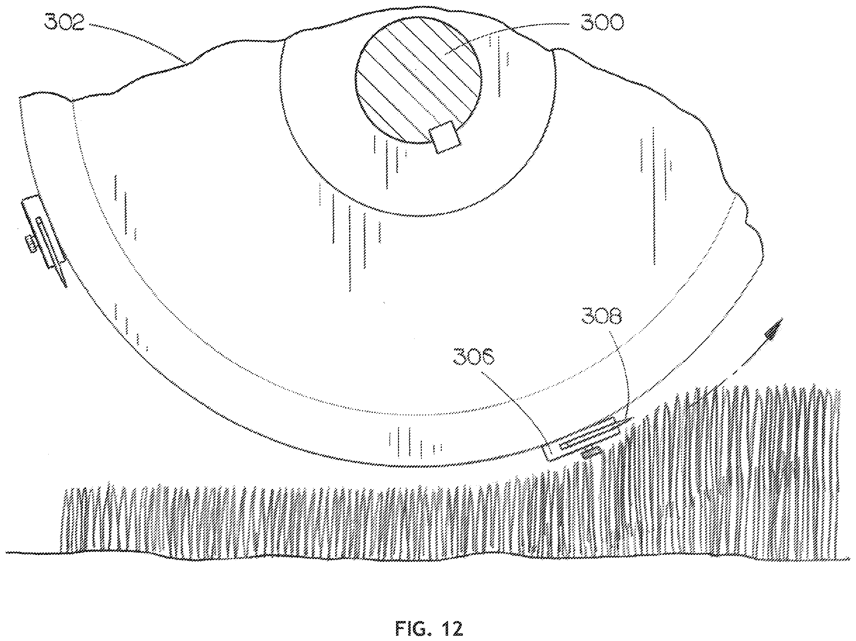

Referring to FIG. 12, a side, close-up, environmental view of a blade assembly illustrating how grass is cut as the blade assembly rotates is shown. In at least one embodiment of the present invention, a mower has a blade assembly configured to rotate horizontally. The blade assembly may include a shaft 300, rotors 302 connected to the shaft 300, and blade clamps 306 holding blades 308 connected to the rotors 302. As the shaft 300 turns, the cutting edge of each blade 308 cuts any grass in its path. Because the blade assembly rotates substantially faster than the forward velocity of any mower, the action of the blade assembly creates a gradient in the length of grass in the immediate vicinity of the blade assembly. For example, grass may be-shortest directly below the shaft 300 where the cutting edge of each blade 308 passes closest to the ground, and progressively longer as the blades 308 rotate until the blades 308 reach a point in the rotation when they are no longer cutting any grass. Such mowing action progressively removes several portions of each blade of grass until the grass is cut to its shortest length. A mower according to at least one embodiment of the present invention effectively mulches grass clippings, and smaller clippings are easier to transport through airflow. The cut ends of grass are substantially similar to those achieved with a reel mower.

The aesthetic quality and health of a lawn cut with a reel mower is far superior to that of a rotary mower. Rotary mowers leave the cut ends ragged while the reel mower's shearing cut leaves cut ends relatively clean. A ragged edge leaves grass more prone to disease. In at least one embodiment of the present invention, the cut quality produced by a horizontal rotary mower significantly better than a rotary mower and closely match the cut quality of a reel mower.

Most turf, when not dormant and adequately cared for, grows approximately 3.81 to 5.08 centimeters (1.5 to 2.0 inches) per week. The healthiest lawns are maintained at 6.35 to 7.62 centimeters (2.5 to three inches) tall and are preferably mowed so as to remove not more than 1/3 of the blade height at any mowing.

The time between incidents of cut $t_c$ for any given leaf of grass is approximated by:

$$t_c = \frac{1}{\omega N}$$

Where $N$ is the number of blades and $\omega$ is the angular velocity. The arc length of interface S is given by:

$$S = \left[ cos^{-1} \left( \frac{r + h_c - h_g}{r} \right) \right] r$$

Where $r$ is the radius, $\theta$ is the angle of the cut, $h_c$ is the resultant grass cut height, and $h_g$ is the grass height at the measured cut position. The blade 308 will arc through a path S over a distance traveled in a cutting direction where grass is being cut. The time required to traverse the ground distance d coextensive with the blade assembly arc length S at the velocity $v$ of the mower in the cutting direction is given by:

$$t = \frac{d}{v}$$

Therefore, $n$ the number of times a single leaf of grass will be cut may be characterized by:

$$n = \frac{t}{t_c} = \frac{d}{v}\omega N$$

Assume three hundred twenty leaves of grass per 6.4516 square centimeter square inch, and 17.88 leaves of grass per 2.54 linear centimeters (linear inch), and assume a walking speed of 5.63 km or 3.5 miles per hour (1.564 meters or 5.13 feet per second and 93.82 meters or 307.8 feet per minute) which is in the middle of the normal walking speed range of 3.22 to 8.05 km (two to five miles) per hour. A mower according to at least one embodiment of the present invention (having three blades 308 and operating with a blade assembly angular velocity of forty-five hundred rotations per minute) would produce 13,500 cuts per minute. 13,500 cuts per minute is equal to approximately 147.64 cuts per meter (forty-four cuts per foot) or 1.437 cuts per centimeter (3.65 cuts per inch) at full cut.

Looking at it another way: as the horizontal rotary mower moves forward in the direction of cutting, each grass leaf encounters a blade 308 cutting edge slightly earlier in each rotation of the blade assembly until the grass leaf is directly below the a shaft driving the blade assembly. At that point the grass leaf has been cut to the cut height $h_c$. Each encounter between a grass leaf and a blade 308 removes a marginal portion of the grass leaf, producing a clipping. The number of clippings can be determined by the number of encounters between a grass leaf and a blade 308 before the grass leaf reaches the cut height $h_c$. The size of each clipping depends on the number of blades 308, the rotational velocity of the blade assembly and the velocity $v$ of the mower in a cutting direction. According to the previous example, a horizontal rotary mower with three blades 308 operating at four thousand five hundred rotations per minute and traveling at a forward velocity of 93.82 meters (307.8 feet) per minute would travel approximately 0.685 centimeters (0.27 inches) between encounters with any particular grass leaf. The change in the relative position of each successive blade 308 during encounters with a particular grass leaf is approximately:

$$\theta = sin^{-1}\left(\frac{v}{\omega N r}\right)$$

In the continuing example, each blade 308 encounters the grass leaf approximately 6.288° earlier than the previous blade 308. The marginal change in the length of each clipping for a particular grass leaf is therefore approximated by:

$$(1 - \cos\theta)r$$

According to the continuing example, a horizontal rotary mower will create progressively smaller clippings for each grass leaf until the final clipping would be just 0.0381 centimeters (0.015 inches).

The number of cuts of grass G can be defined by:

$$G = \left[\frac{\omega N}{v}\right][l][\sigma]$$

Where $N$ is the number of blades, $\omega$ is the angular velocity, $v$ is the velocity of the mower in the cutting direction, $\sigma$ is the grass density (number of grass leaves per square meter or foot) and $l$ is the blade width. Based on these relations, and assuming a constant grass leaf density (495,156 leaves of grass per square meter or 46,000 leaves of grass per square foot) and a constant velocity of the mower in the cutting direction $v$ = 93.82 meters (307.8 feet) per minute a horizontal rotary mower according to at least one embodiment of the present invention with six blades 308 and operating at four thousand five hundred rotations per minute may produce 6,485,426 cuts of grass leaves per meter (1,976,758 cuts of grass leaves per linear foot).

By comparison, consider the cut characteristics of a standard rotary mower. A top down diagrammatic view of an area cut by a rotary mower with a twenty inch blade may be divided into regions corresponding to areas cut as the mower moves forward:

The area of each region may be calculated as follows:

$$\theta = cos^{-1}\left(\frac{r-d}{r}\right)$$

where r = 25.4 *centimeters or* 10 *inches* and d = 5.08 *centimeters or* 2 *inches,* the forward distance traveled between cuts; $\theta = cos^{-1}(0.8) = 36.87° \cong 37°$. When calculating cut area, we may first calculate the full circular area by $\pi r^2 = \pi(25.4)^2 \cong 2025.8$ *centimeters*$^2$ *or* $\pi(10)^2 \cong 314$ *inches*$^2$. The total area of the wedge containing half the $A_1$ region is derived by:

$$\frac{2025.8\ centimeters^2}{360/_{37}} = 206.45\ centimeters^2\ or\ \frac{314\ inches^2}{360/_{37}} = 32\ inches^2$$

The area of the $A_1$ region may be found as follows:

$$\sin\theta \times r = LO1$$

$$LO1 = \sin 37 \times 25.4 \cong 15.24\ centimeters\ or\ \sin 37 \times 10 \cong 6\ inches$$

$$LA1 = r - d = 25.4 - 5.08 = 20.32\ centimeters\ or\ 10 - 2 = 8\ inches$$

The area of the triangular portion of the wedge, not including the shaded portion of the $A_1$ region is:

$$\frac{1}{2}(LO1 \times LA1) = \frac{15.24 \times 20.32}{2} \cong 155\ centimeters^2 or\ \frac{6 \times 8}{2} \cong 24\ inches^2$$

The area of the total $A_1$ region, both inside and outside the wedge, is therefore:

$$2 \times (206.45\ centimeters^2 - 155\ centimeters^2) = 102.9\ centimeters^2$$

*or*

$$2 \times (32\ inches^2 - 24\ inches^2) = 16\ inches^2$$

Now consider area of the $A_2$ region:

$$\theta = cos^{-1}\left(\frac{r - d}{r}\right)$$

where $r$ = 25.4 *centimeters or* 10 *inches* and $d$ = 10.16 *centimeters or* 4 *inches;* $\theta = cos^{-1}(0.6) \cong 53°$. The total area of the wedge containing half the $A_2$ region is derived by:

$$\frac{2025.8\ centimeters^2}{360/53} = 296.77\ centimeters^2\ or\ \frac{314\ inches^2}{360/53} = 46\ inches^2$$

The area of the $A_2$ region may be found:

$$LO2 = \sin 53 \times 25.4 \cong 20.32\ centimeters\ or\ \sin 53 \times 10 \cong 8\ inches$$

$$LA2 = 15.24\ centimeters\ or\ 6\ inches$$

The area of the triangular portion of the wedge, not including the shaded portion of the $A_2$ region is:

$$\frac{1}{2}(LO2 \times LA2) = \frac{20.32 \times 15.24}{2} \cong 155\ centimeters^2\ or\ \frac{8 \times 6}{2} \cong 24\ inches^2$$

The area of the total $A_2$ region, both inside and outside the wedge, is therefore:

$$2 \times (296.77 \; centimeters^2 - 155 \; centimeters^2 - 20.32 \; centimeters^2)$$

$$= 242.9 \; centimeters^2 \; or$$

$$2 \times (46 \; inches^2 - 24 \; inches^2 - 8 \; inches^2) = 28 \; inches^2$$

where 51.6128 *centimeters*$^2$ (8 *inches*$^2$) is the area attributable to the $A_1$ region within the wedge. Continuing the process to find the area of the $A_3$ region:

$$\theta = cos^{-1}(0.4) \cong 66°$$

The total area of the wedge containing half the $A_3$ region is:

$$\frac{2025.8 \; centimeters^2}{360/66} = 296.77 \; centimeters^2 \; or \; \frac{314 \; inches^2}{360/66} = 46 \; inches^2$$

The area of the triangular portion of the wedge, not including the shaded portion of the $A_3$ region is:

$$LO3 = \sin 66 \times 25.4 \cong 23.37 \; centimeters \; or \; \sin 66 \times 10 \cong 9.2 \; inches$$

$$LA3 = 10.16 \; centimeters \; or \; 4 \; inches$$

$$\frac{1}{2}(LO3 \times LA3) = \frac{23.37 \times 10.16}{2} \cong 118.7 \; centimeters^2 \; or \frac{9.2 \times 4}{2} \cong 18.4 \; inches^2$$

The total shaded portion of the wedge, not considering the inner circle, is

$$296.77 \; centimeters^2 - 118.7 \; centimeters^2 = 178.07 \; centimeters^2 \; or \; 46 \; inches^2 -$$
$$18.4 \; inches^2 = 39.6 \; inches^2.$$

13

The inner circular portion of the wedge that would correspond to the $A_3$ region must be removed:

$$\theta_i = \cos^{-1}\left(\frac{ri - d_{ri}}{ri}\right) = \cos^{-1}\left(\frac{15.24 - 5.08}{15.24}\right) \ or \ \cos^{-1}\left(\frac{6 - 2}{6}\right) \cong 48°$$

The total area of the inner circle is:

$$\pi(15.24)^2 \cong 729.03 \ centimeters^2 \ or \ \pi(6)^2 \cong 113 \ inches^2$$

The total area of the inner circle wedge is:

$$\frac{729.03 \ centimeters^2}{360/48} = 96.77 \ centimeters^2 \ or \ \frac{113 \ inches^2}{360/48} = 15 \ inches^2$$

The area of the triangular portion of the inner circle wedge, not including the shaded portion is:

$$LO3_i = \sin 48 \times 15.24 \cong 11.43 \ centimeters \ or \ \sin 48 \times 6 \cong 4.5 \ inches$$

$$LA3_i = 10.16 \ centimeters \ or \ 4 \ inches$$

$$\frac{1}{2}(LO3_i \times LA3_i) = \frac{11.43 \times 10.16}{2} \cong 58 \ centimeters^2 \ or \ \frac{4.5 \times 4}{2} \cong 9 \ inches^2$$

The total shaded portion of the inner circle is 96.77 $centimeters^2$ - 58 $centimeters^2$ = 38.77 $centimeters^2$ or 15 $inches^2$ - 9 $inches^2$ = 6 $inches^2$. The area of the total $A_3$ region, both inside and outside the wedge, is therefore:

$$2 \times (255.48 \ centimeters^2 - 51.61 \ centimeters^2 - 90.32 \ centimeters^2$$
$$- 38.71 \ centimeters^2) = 149.68 \ centimeters^2 \ or$$

$$2 \times (39.6\ inches^2 - 8\ inches^2 - 14\ inches^2 - 6\ inches^2) = 23.2\ inches^2$$

where 51.61 *centimeters*$^2$ *or* 8 *inches*$^2$ is the area attributable to the $A_1$ region within the wedge, 90.32 *centimeters*$^2$ *or* 14 *inches*$^2$ is the area attributable to the $A_2$ region within the wedge and 38.71*centimeters*$^2$ *or* 6 *inches*$^2$ is the area attributable to the inner circle. Continuing the process to find the area of the $A_4$ region:

$$\theta = cos^{-1}(0.2) \cong 78.5°$$

The total area of the wedge containing half the $A_4$ region is:

$$\frac{2025.8\ centimeters^2}{360/78.5} = 441.93\ centimeters^2\ or\ \frac{314\ inches^2}{360/78.5} = 68.5\ inches^2$$

The area of the triangular portion of the wedge, not including the shaded portion of the $A_4$ region is:

$$LO4 = \sin 78.5 \times 25.4 \cong 24.89\ centimeters\ or\ \sin 78.5 \times 10 \cong 9.8\ inches$$

$$LA4 = 5.08\ centimeters\ or\ 2\ inches$$

$$\frac{1}{2}(LO4 \times LA4) = \frac{24.89 \times 5.08}{2} \cong 63.23\ centimeters^2\ or\ \frac{9.8 \times 2}{2} \cong 9.8\ inches^2$$

The total shaded portion of the wedge, not considering the inner circle, is

$$441.93\ centimeters^2 - 24.89\ centimeters^2 \cong 381\ centimeters^2\ or\ 68.5\ inches^2 - $$
$$9.8\ inches^2 \cong 59\ inches^2.$$

The inner circular portion of the wedge that would correspond to the $A_4$ region must be removed:

$$\theta_i = \cos^{-1}\left(\frac{15.24 - 10.16}{15.24}\right) \cong 70.5°$$

The total area of the inner circle wedge is:

$$\frac{729.03 \; centimeters^2}{360/70.5} = 143.23 \; centimeters^2 \; or \; \frac{113 \; inches^2}{360/70.5} = 22.2 \; inches^2$$

The area of the triangular portion of the inner circle wedge, not including the shaded portion is:

$$\mathrm{LO4}_i = \sin 70.5 \times 15.24 \cong 14.5 \; centimeters \; or \; \sin 70.5 \times 6 \cong 5.7 \; inches$$

$$\mathrm{LA4}_i = 5.08 \; centimeters \; or \; 2 \; inches$$

$$\frac{1}{2}(\mathrm{LO4}_i \times \mathrm{LA4}_i) = \frac{14.5 \times 5.08}{2} \cong 36.77 \; centimeters^2 \; or \; \frac{5.7 \times 2}{2} \cong 5.7 \; inches^2$$

The area of the shaded portion of the inner circle wedge is 143.23 $centimeters^2$ - 36.77 $centimeters^2$ = 106.46 $centimeters^2$ or 22.2 $inches^2$ - 5.7 $inches^2$ = 16.5 $inches^2$. The area of the total $A_4$ region, both inside and outside the wedge, is therefore:

$$2 \times (381 \; centimeters^2 - 106.45 \; centimeters^2 - 51.61 \; centimeters^2$$

$$- 90.32 \; centimeters^2 - 74.84 \; centimeters^2) = 115.56 \; centimeters^2$$

or

$$2 \times (59 \; inches^2 - 16.5 \; inches^2 - 8 \; inches^2 - 14 \; inches^2 - 11.6 \; inches^2)$$

$$= 17.8 \; inches^2$$

where 51.61 *centimeters*$^2$ *or* 8 *inches*$^2$ is the area attributable to the $A_1$ region within the wedge, 90.32 *centimeters*$^2$ *or* 14 *inches*$^2$ is the area attributable to the $A_2$ region within the wedge, 74.84 *centimeters*$^2$ or 11.6 *inches*$^2$ is the area attributable to the $A_3$ region within the wedge and 106.45 *centimeters*$^2$ *or* 16.5 *inches*$^2$ is the area attributable to the inner circle. Continuing the process to find the area of the $A_5$ region:

For a single quadrant, the $A_5$ region is defined by the total area of the quadrant, minus the area of the inner circle in the quadrant, minus the areas of $A_1$ through $A_4$ in the quadrant:

$$\frac{2025.8 \; centimeters^2 - 729 \; centimeters^2}{4} - 51.61 \; centimeters^2 - 90.32 \; centimeters^2$$

$$- 74.84 \; centimeters^2 - 57.42 \; centimeters^2 = 50.01 \; centimeters^2$$

$$\cong 50 \; centimeters^2$$

or

$$\frac{314 \; inches^2 - 113 \; inches^2}{4} - 8 \; inches^2 - 14 \; inches^2 - 11.6 \; inches^2 - 8.9 \; inches^2$$

$$= 7.75 \; inches^2 \cong 8 \; inches^2$$

The total area of the $A_5$ region is therefore approximately 103 *centimeters*$^2$ *or* 16 *inches*$^2$. A person skilled in the art may appreciate that, as the area circumscribed by such a rotary mower blade is substantially symmetrical, the remaining regions will have equivalent, inverse areas.

A rotary mower operating at 3000 RPM and traveling at 5.63 kph (3.5 mph) (93.8 meters/min or 307.8 ft/min) will make a number of cuts described by:

$$\frac{\omega N}{v} = \frac{3000 \; RPM \times 2 \; blades}{93.8 \; ^m/_{min}} \approx 64 \; ^{cuts}/_m = 0.64 \; ^{cuts}/_{cm} = 1 \; cut \; every \; 1.56 \; cm$$

$$or \ \frac{3000 \ RPM \times 2 \ blades}{307.8 \ {ft}/{min}} = 19.5 \ {cuts}/{ft} = 1.6 \ {cuts}/{inch} = 1 \ cut \ every \ 0.62 \ inches$$

Each incremental step forward adds additional area to the cutting region. The number of cuts for each are in a 50.8 centimeter (twenty inch) distance may be calculated by multiplying the total number of cuts for each area during all twenty steps by the average number of blade passes for each step. A blade makes 0.64 cuts per centimeter (1.6 cuts per inch). Because the rotary mower is moving and the cut distance for each step is 5.08 centimeters (two inches), the average number of cuts over that distance is 0.64 (1.6). The rotary mower blades make multiple passes over certain regions. For example:

$$A_1: 1.6 \times 10 \ passes = 16 \ cuts$$

$$A_2: 1.6 \times 9 \ passes = 14.4 \ cuts$$

$$A_3: 1.6 \times 8 \ passes = 12.8 \ cuts$$

$$A_4: 1.6 \times 7 \ passes = 11.2 \ cuts$$

$$A_5: 1.6 \times 6 \ passes = 9.6 \ cuts$$

$$A_6: 1.6 \times 5 \ passes = 8 \ cuts$$

$$A_7: 1.6 \times 4 \ passes = 6.4 \ cuts$$

$$A_8: 1.6 \times 3 \ passes = 4.8 \ cuts$$

$$A_9: 1.6 \times 2 \ passes = 3.2 \ cuts$$

$$A_{10}: 1.6 \times 1 \ passes = 1.6 \ cuts$$

The number of grass leaves cut can be estimated by combining the number of cuts in each region that have the same area and applying the equation:

$$Number \ of \ grass \ leaves \ cut$$
$$= (Number \ of \ blade \ cuts) \times (Area)$$
$$\times \left(\frac{Average \ number \ of \ grass \ leaves}{Unit \ area}\right)$$

Assuming approximately 46,000 grass leaves per square foot, and combining the similar areas of regions $A_1$, $A_{10}$, $A_5$ and $A_6$, there are a total of 35.2 blade cuts. Likewise, combining the similar areas of regions $A_2$ and $A_9$ produces a total of 17.6 blade cuts; combining the similar areas of regions $A_3$ and $A_8$ produces a total of 17.6 blade cuts; and combining the similar areas of regions $A_4$ and $A_7$ produces a total of 17.6 blade cuts. Therefore:
For $A_1$, $A_{10}$, $A_5$ and $A_6$

$$[35.2 \; cuts][0.01 \; m^{\,2}] \left[ 495156 \frac{leaves}{m^{\,2}} \right] \; or$$

$$[35.2 \; cuts][0.11 \; ft^{\,2}] \, [46000 \; leaves/ft^{\,2}] = 178112 \; leaves$$

For $A_2$ and $A_9$

$$[17.6 cuts][0.017 \; m^{\,2}] \left[ 495156 \frac{leaves}{m^{\,2}} \right] \; or$$

$$[17.6 cuts][0.19 \; ft^{\,2}] \, [46000 \; leaves/ft^{\,2}] = 153824 \; leaves$$

For $A_3$ and $A_8$

$$[17.6 \; cuts][0.015 \; m^{\,2}] \left[ 495156 \frac{leaves}{m^{\,2}} \right] \; or$$

$$[17.6 \; cuts][0.16 \; ft^{\,2}] \, [46000 \; leaves/ft^{\,2}] = 129536 \; leaves$$

For $A_4$ and $A_7$

$$[17.6 \; cuts][0.012 \; m^{\,2}] \left[ 495{,}156 \frac{leaves}{m^{\,2}} \right] \; or$$

$$[17.6 \; cuts][0.13 \; ft^{\,2}] \, [46000 \; leaves/ft^{\,2}] = 105248 \; leaves$$

For a total of 566,720 leaves cut over a 50.8 centimeter (twenty inch) distance. A prior art rotary mower operating at a blade rotational speed $\omega$ of 3,000 rotations per minute may produce approximately 340,032 cuts of grass leaves per 0.3048 meters (one linear foot). In contrast, a horizontal rotary mower according to at least one embodiment of the present invention produces 1,976,758 cuts of grass leaves per 0.3048 meters (one linear foot), or 5.8 times as many cuts. This means that grass clippings are much more finely mulched with a mower according to at least one embodiment of the present invention. Finer clippings result in greater nutrient availability if the clippings are left on the lawn.

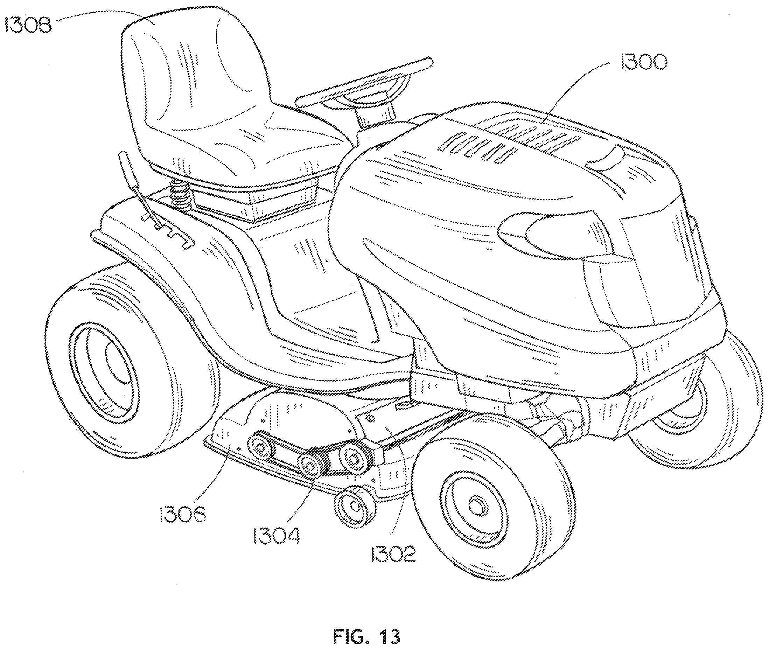

Referring to FIG. 13, a perspective view of riding type lawnmower according to at least one embodiment of the present invention is shown. In at least one embodiment of the present invention, a lawnmower includes an operator seat 1308 and a drive mechanism 1300 connected to a blade assembly through a power transfer mechanism 1304 such as one or more belts. The blade assembly may be contained within an undermounted blade assembly guard 1306 with a blade assembly access panel 1302 to allow maintenance and replacement of blades in the blade assembly. A blade assembly useful in this embodiment of the present invention is as described herein.

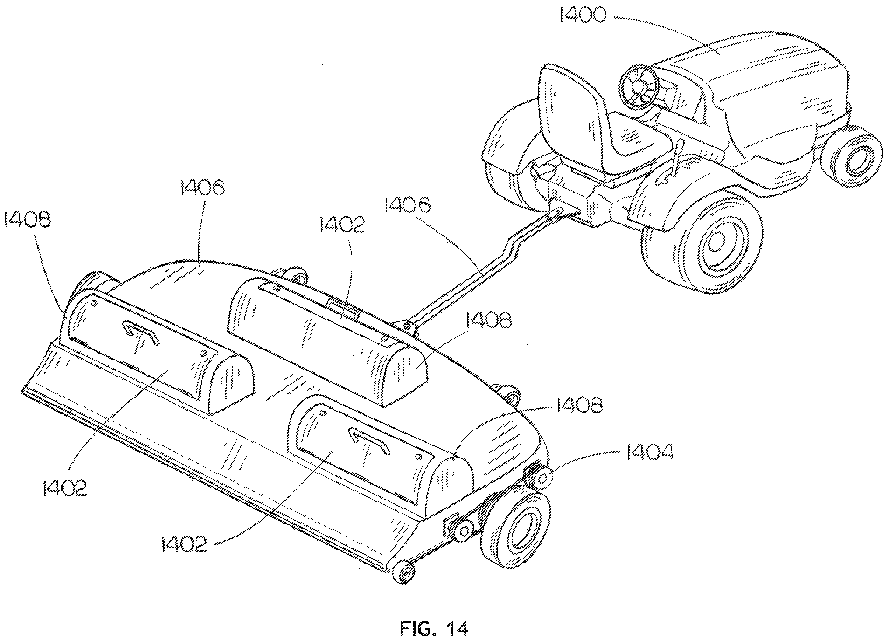

Referring to FIG. 14, a perspective view of a commercial mower deck according to at least one embodiment of the present invention pulled behind a tractor is shown. In one embodiment of the present invention, a tractor 1400 is connected to a mower deck 1406 through a towing connector 1406 which may include a power transfer mechanism such as a power take-off. Alternatively, the towing connector 1406 may connect the tractor 1400 to the mower deck 1406 for towing while one or more blade assemblies are powered through other means such as a power transfer mechanism 1404 connecting the one or more blade assemblies to one or more mower deck 1406 wheels.

The mower deck 1406 may include one or more blade assembly guards 1408, each blade assembly guard 1408 housing a blade assembly according to embodiments of the present invention. Each blade assembly guard may include a blade assembly access panel 1402 to allow blades in the corresponding blade assembly to be replaced.

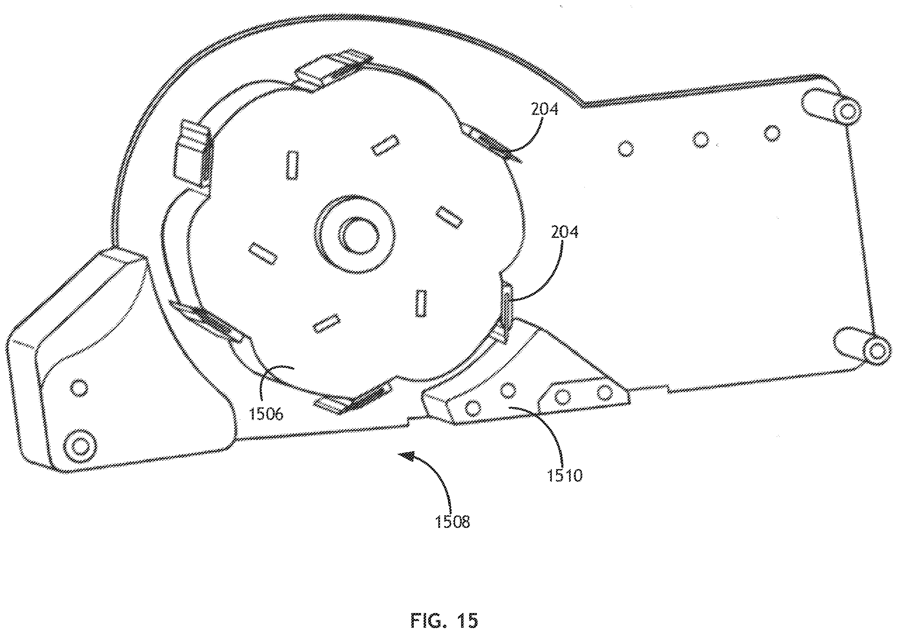

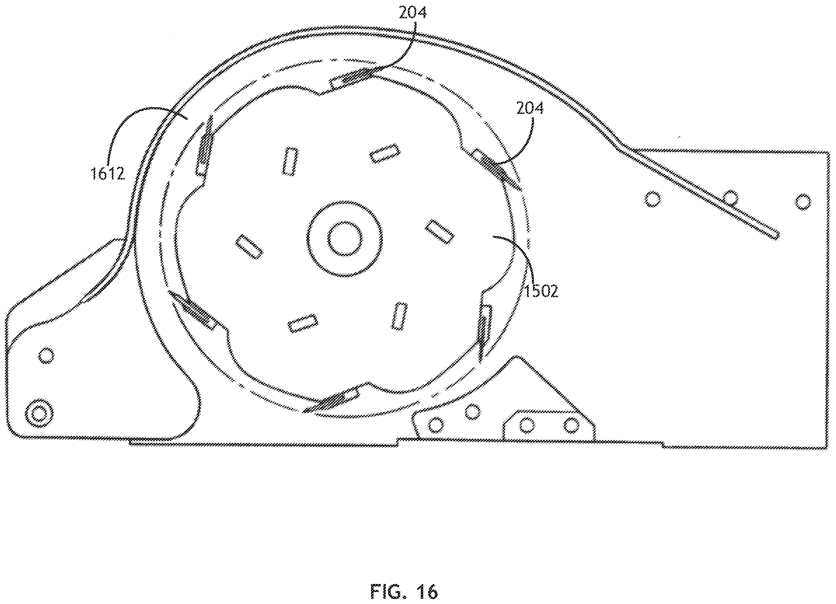

Referring to FIGs. 15 and 16, side, cross-sectional views of a housing and rotor according to at least one embodiment of the present invention are shown. In at least one embodiment, a plurality of blades 204 are connected to two or more rotors 1506. The plurality of blades 204 and two or more rotors 1506 define a rotatable blade assembly. At least one of the two or more rotors 1506 is configured to engage a drive mechanism and allow the blade assembly to rotate.

A housing according to at least one embodiment of the present invention may include one or more baffles 1510 for directing an airflow within the housing. In at least one embodiment, the blade assembly does not protrude from the house. Grass is drawn into an opening 1508 via the airflow.

The housing may define a substantially constant airflow space 1612 between a front surface of the housing and the path defined by the blades 204. Such airflow space 1612 may serve to further control the airflow and direct grass clippings toward an outlet.

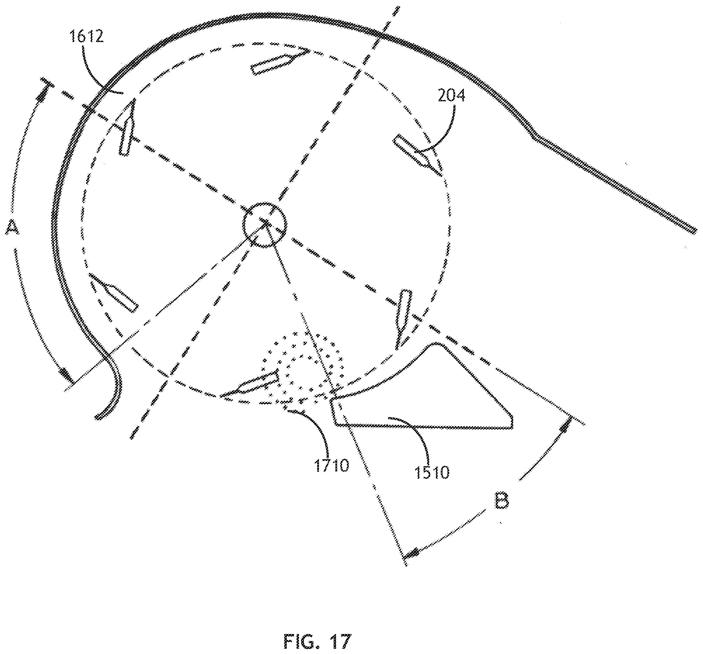

Referring to FIG. 17, a side, diagrammatic view of a housing and rotor according to at least one embodiment of the present invention is shown. A baffle 1510 according to at least one embodiment of the present invention produces a rear vortex 1710 useful for producing an airflow to draw grass into the blades 204 during operation. The rear vortex 1710 may be a product of the angular space occupied by the baffle 1510 and a variable distance gap between the baffle 1510 and the path defined by the blades 204.

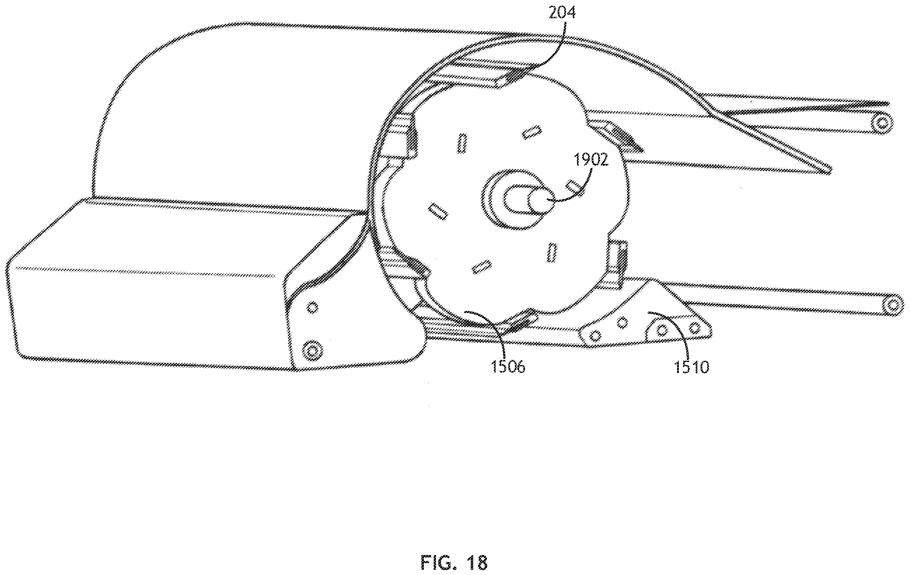

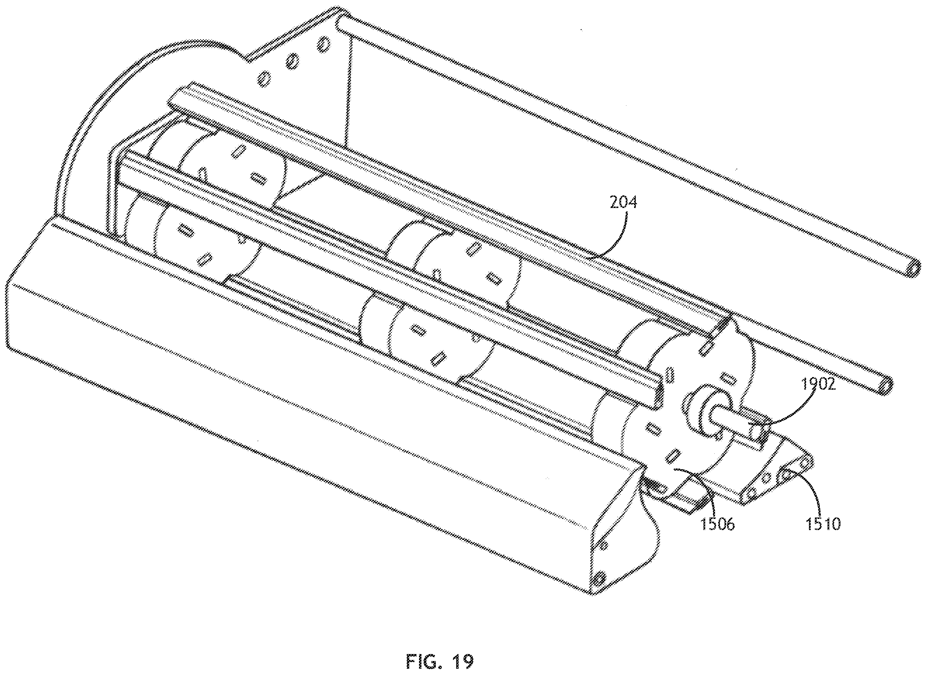

Referring to FIGs. 18 and 19, perspective, cross-sectional views of a housing and rotor according to at least one embodiment of the present invention are shown. In at least one embodiment, blades 204 and rotors 1506 define a blade assembly. At least one rotor of the blade assembly may be-connected to a drive engaging portion 1902. The drive engaging portion 1902 may engage a drive mechanism to import a rotational force to the rotors 1506 and blades 204, and also allow the entire blade assembly to be easily disengaged from the drive mechanism and removed so that the entire blade assembly may be replaceable through an opening in the side of the housing.

It is believed that the present invention and many of its attendant advantages will be understood by the foregoing description of embodiments of the present invention. Embodiments may comprise features of the following related aspects:

According to one related aspect there is provided a lawn mowing apparatus for cutting grass growing on a surface, comprising: a rotatable blade assembly comprising: two or more rotors, each of the two or more rotors configured to rotate about the same axis, such axis substantially parallel to a surface to be cut, the two or more rotors configured to hold each replaceable blade in a plurality of replaceable blades, such replaceable blades being no more than 0.075 inches thick, wherein the two or more rotors is configured to hold each of the plurality of replaceable blades such that a cutting edge of each replaceable blade is oriented in a direction of rotation of the two or more rotors.

The rotatable blade assembly may be configured to produce an airflow during operation to direct grass clippings.

Each of the two or more replaceable blades comprises: a ductile portion; and a hardened cutting edge comprising a depth of the replaceable blade, wherein: the hardened cutting edge has a hardness of at least Rockwell C 50; the ductile portion has a hardness less than Rockwell C 50; and each replaceable blade is configured to attach to the two or more rotors. The one or more replaceable blades is no more than 0.075 inches thick. The rotatable blade assembly may be configured to rotate at an angular velocity sufficient to marginally trim grass in a sequence of cuts as the lawn mowing apparatus travels linearly over the surface to be cut.

According to another related aspect there is provided a lawn mowing apparatus for cutting grass growing on a surface, comprising: a lawn mower blade comprising: a ductile portion; and a hardened cutting edge comprising a depth of the lawn mower blade, wherein: the lawn mower blade is no more than 0.075 inches thick; the hardened cutting edge has a hardness of at least Rockwell C 50; the ductile portion has a hardness less than Rockwell C 50; and the lawn mower blade is configured to attach to two or more rotors in a horizontal rotary lawn more blade assembly.

The lawn mower blade cutting edge depth may comprise no more than 0.02 inches of the lawn mower blade. The lawn mower blade may comprise one of 1074 thru 1095 grade carbon steel. The lawn mower blade is configured to be removable and replaceable from the horizontal rotary lawn more blade assembly.

According to another related aspect there is provided a lawn mowing apparatus for cutting grass growing on a surface, comprising: a drive mechanism; a rotatable blade assembly connected to the drive mechanism, comprising: one or more rotors configured to rotate about an axis; and a blade assembly guard configured to partially enclose the rotatable blade assembly, wherein: the rotatable blade assembly is configured to be rotatably driven by said drive mechanism about an axis substantially parallel to a surface to be cut, and configured to hold a plurality of blades no more than 0.075 inches thick such that a cutting edge of each of the plurality of blades is oriented in a direction of rotation; and the blade assembly guard defines a blade chamber.

The rotatable blade assembly may be configured to produce an airflow during operation to direct grass clippings. The rotatable blade assembly may be configured to be replaceable. Each of the one or more blades comprises: a ductile portion; and a hardened cutting edge comprising a depth of the blade, wherein: the hardened cutting edge has a hardness of at least Rockwell C 50; the ductile portion has a hardness less than Rockwell C 50; and the blade is configured to be affixed to an outer portion of the one or more rotors. The hardened cutting edge may be produced by at least one of applying a coating, impregnating a material, and by altering the chemistry of the cutting edge. The one or more blades isno more than 0.075 inches thick. The one or more blades isconfigured to be replaceable. Each cutting edge depth may comprise no more than 0.02 inches of the blade.

The blade assembly guard may comprise: a housing portion configured to partially enclose the rotatable blade assembly; a ducting portion configured to closely surround the rotatable blade assembly; a rotatable blade assembly access panel in the ducting portion configured to allow access to the rotatable blade assembly; and a blade opening configured to allow blades in the rotatable blade assembly access to grass. The housing portion may define a front section and a rear section, the front section and rear section configured to provide a buffer distance between a person and the rotatable blade assembly. The rotatable blade assembly access panel may be configured to allow the rotatable blade assembly to be removed from a side of the housing; and the rotatable blade assembly may comprise a disengaging mechanism configured to allow the rotatable blade assembly to disengage from the drive mechanism. The rotatable blade assembly access panel may be configured to allow blades in the rotatable blade assembly to be replaced.

**Claims**

1. A lawn mowing apparatus for cutting grass growing on a surface having a drive mechanism (100), a rotatable blade assembly (202) connected to the drive mechanism having two or more rotors (302, 702, 802) configured to rotate about an axis substantially parallel to a surface to be cut and hold replaceable blades (204, 308) tangential to each of the rotors, the rotatable blade assembly at least partially enclosed by a blade assembly guard (206, 1408) that defines a blade chamber, **characterised by** a plurality of blade holding elements (306, 706, 806) attached to each of the two or more rotors, each defining a blade channel (502) configured to hold a replaceable blade; and
a plurality of replaceable blades, each no more than 0.1905 centimeters (0.075 inches) thick, each of the plurality of blades comprising:
a ductile portion having a hardness less than Rockwell C 50; and
a hardened cutting edge (510) having a hardness of at least Rockwell C 50,
wherein:

each of the plurality of blades is held in one of the plurality of blade holding elements attached to each of the two or more rotors;
the rotatable blade assembly oriented in a direction of rotation of the two or more rotors to cut grass without a stationary bedknife.

2. The lawn mowing apparatus of Claim 1, wherein the rotatable blade assembly is configured to rotate at an angular velocity sufficient to marginally trim grass leaves in a sequence of cuts as the lawn mowing apparatus travels linearly over the surface to be cut.

3. The lawn mowing apparatus of Claim 1, wherein the rotatable blade assembly is configured to produce an airflow (1100) during operation to direct grass clippings.

4. The lawn mowing apparatus of Claim 1, wherein the rotatable blade assembly is configured to be replaceable.

5. The lawn mowing apparatus of Claim 1, wherein each cutting edge depth comprises no more than 0.058 centimeters (0.02 inches) of the replaceable blade.

6. The lawn mowing apparatus of Claim 1, wherein the blade assembly guard comprises:

a housing portion (106) configured to partially enclose the rotatable blade assembly;
a ducting portion (206, 1510) configured to closely surround the rotatable blade assembly;
a rotatable blade assembly access panel (102) in the ducting portion configured to allow access to the rotatable blade assembly; and
a blade opening configured to allow replaceable blades in the rotatable blade assembly access to grass.

7. The lawn mowing apparatus of Claim 6, wherein the rotatable blade assembly access panel is configured to allow access to the one or more replaceable blades, such that the one or more replaceable blades are removable from the rotatable blade assembly.

8. The lawn mowing apparatus of Claim 6, wherein:

the rotatable blade assembly access panel is configured to allow the rotatable blade assembly to be removed from a side of the housing; and
the rotatable blade assembly comprises a disengaging mechanism
configured to allow the rotatable blade assembly to disengage from the drive mechanism.

**Patentansprüche**

1. Rasenmähgerät zum Schneiden von auf einer Fläche wachsendem Gras, besitzend einen Antriebsmechanismus (100), eine drehbare Klingenanordnung (202), welche mit dem Antriebsmechanismus verbunden ist, welche zwei oder mehr Rotoren (302, 702, 802) besitzt, welche konfiguriert sind, um um eine Achse im Wesentlichen parallel zu einer zu schneidenden Fläche zu drehen, und austauschbare Klingen (204, 308) zu halten, welche tangential zu jedem der Rotoren sind, wobei die drehbare Klingenanordnung mindestens teilweise durch einen Klingenanordnungsschutz (206, 1408) umschlossen ist, welcher eine Klingenkammer definiert, **gekennzeichnet durch** eine Vielzahl von Klingenhalteelementen (306, 706, 806), welche an jedem der zwei oder mehreren Rotoren befestigt sind, wobei ein jedes einen Klingenkanal (502) definiert, welcher konfiguriert ist, um eine austauschbare Klinge zu halten; und

   eine Vielzahl von austauschbaren Klingen, wobei jede davon nicht mehr als 0,1905 Zentimeter (0,075 Zoll) dick ist, wobei jede der Vielzahl von Klingen Folgendes besitzt:

   einen duktilen Abschnitt, welcher eine Härte unter C 50 Rockwell besitzt; und
   eine gehärtete Schneidkante (510), welche eine Härte von mindestens C 50 Rockwell besitzt
   wobei:
   jede der Vielzahl von Klingen in einem der Vielzahl von Klingenhalteelementen gehalten wird, welche an jedem der zwei oder mehreren Rotoren befestigt sind;
   die drehbare Klingenanordnung in eine Drehrichtung der zwei oder mehreren Rotoren ausgerichtet ist, um Gras ohne ein stationäres Untermesser zu schneiden.

2. Rasenmähgerät nach Anspruch 1, bei welchem die drehbare Klingenanordnung konfiguriert ist, um mit einer Winkelgeschwindigkeit zu drehen, welche ausreicht, um Grashalme am Rand in einer Sequenz von Schnitten zu trimmen, während das Rasenmähgerät sich linear über die zu schneidende Fläche bewegt.

3. Rasenmähgerät nach Anspruch 1, bei welchem die drehbare Klingenanordnung konfiguriert ist, um einen Luftstrom (1100) im Betrieb zu erzeugen, um den Grasschnitt zu lenken.

4. Rasenmähgerät nach Anspruch 1, bei welchem die drehbare Klingenanordnung konfiguriert ist, um austauschbar zu sein.

5. Rasenmähgerät nach Anspruch 1, bei welchem jede Schneidkantentiefe nicht mehr als 0,058 Zentimeter (0,02 Zoll) der austauschbaren Klinge umfasst.

6. Rasenmähgerät nach Anspruch 1, bei welchem der Klingenanordnungsschutz Folgendes beinhaltet:

   einen Gehäuseabschnitt (106), konfiguriert zum teilweisen Umschließen der drehbaren Klingenanordnung;
   einen Durchleitungsabschnitt (206, 1510), konfiguriert zum engen Umgreifen der drehbaren Klingenanordnung;
   ein Zugangsfeld (102) zur drehbaren Klingenanordnung in dem Durchleitungsabschnitt, um Zugang zur drehbaren Klingenanordnung zu ermöglichen; und
   eine Klingenöffnung, konfiguriert, um austauschbaren Klingen in der drehbaren Klingenanordnung Zugang zu Gras zu gewähren.

7. Rasenmähgerät nach Anspruch 6, bei welchem das Zugangsfeld zur drehbaren Klingenanordnung konfiguriert ist, um Zugang zu der einen oder den mehreren austauschbaren Klinge(n) zu gewähren in der Weise, dass die eine oder die mehreren austauschbaren Klingen von der drehbaren Klingenanordnung entfernt werden können.

8. Rasenmähgerät nach Anspruch 6, bei welchem:

   das Zugangsfeld zur drehbaren Klingenanordnung konfiguriert ist, um es der drehbaren Klingenanordnung zu ermöglichen, von einer Seite des Gehäuses entfernt zu werden; und
   die drehbare Klingenanordnung einen Lösemechanismus beinhaltet, welcher konfiguriert ist, um es der drehbaren Klingenanordnung zu ermöglichen, sich vom Antriebsmechanismus zu lösen.

**Revendications**

1. Tondeuse à gazon pour couper l'herbe poussant sur une surface, comportant un mécanisme d'entraînement (100), un ensemble de lames rotatives (202) connecté au mécanisme d'entraînement, comportant deux ou plusieurs rotors (302, 702, 802) configurés pour tourner autour d'un axe sensiblement parallèle à une surface devant être tondue et pour retenir des lames remplaçables (204, 308) agencées de manière tangentielle par rapport à chacun des rotors, l'ensemble de lames rotatives étant au moins partiellement renfermé par un dispositif de protection de l'ensemble de lames (206, 1408) définissant une chambre de lames, **caractérisée par** :

   plusieurs éléments de retenue des lames (306, 706, 806) fixés sur chacun des deux ou des plusieurs rotors, chacun définissant un canal des lames (502) configuré pour retenir une lame remplaçable ; et
   plusieurs lames remplaçables, ayant chacune une épaisseur non supérieure à 0,1905 centimètre (0,075 pouce), chacune des plusieurs lames comprenant :

      une partie ductile ayant une épaisseur inférieure à Rockwell C50 ; et
      une arête de coupe durcie (510) ayant une dureté d'au moins Rockwell C 50 ;
      dans laquelle :

   chacune des plusieurs lames est retenue dans l'un des plusieurs éléments de retenue des lames, fixés à chacun des deux ou des plusieurs rotors ;
   l'ensemble de lames rotatives est orienté dans une direction de rotation des deux ou des plusieurs rotors pour couper l'herbe sans contre-lame stationnaire.

2. Tondeuse à gazon selon la revendication 1, dans laquelle l'ensemble de lames rotatives est configuré pour tourner à une vitesse angulaire suffisante pour couper marginalement les brins d'herbe dans une séquence de coupes lors du déplacement linéaire de la tondeuse à gazon au-dessus de la surface devant être tondue.

3. Tondeuse à gazon selon la revendication 1, dans laquelle l'ensemble de lames rotatives est configuré pour produire un flux d'air (1100) en service pour diriger l'herbe coupée.

4. Tondeuse à gazon selon la revendication 1, dans laquelle l'ensemble de lames rotatives est configuré pour être remplaçable.

5. Tondeuse à gazon selon la revendication 1, dans laquelle chaque profondeur d'arête de coupe ne comprend pas plus de 0,058 centimètres (0,02 pouce) de la lame remplaçable.

6. Tondeuse à gazon selon la revendication 1, dans laquelle le dispositif de protection de l'ensemble de lames comprend :

   une partie de boîtier (106) configurée pour renfermer partiellement l'ensemble de lames rotatives ;
   une partie de conduit (206, 510) configurée pour entourer étroitement l'ensemble de lames rotatives ;
   un panneau d'accès (102) à l'ensemble de lames rotatives dans la partie de conduit, configuré pour permettre l'accès à l'ensemble de lames rotatives ; et
   une ouverture de lame configurée pour permettre aux lames remplaçables dans l'ensemble de lames rotatives d'accéder à l'herbe.

7. Tondeuse à gazon selon la revendication 6, dans laquelle le panneau d'accès de l'ensemble de lames rotatives est configuré pour permettre l'accès à la une ou aux plusieurs lames remplaçables, de sorte que l'une ou les plusieurs lames remplaçables peuvent être retirées de l'ensemble de lames rotatives.

8. Tondeuse à gazon selon la revendication 6, dans laquelle :

   le panneau d'accès à l'ensemble de lames rotatives est configuré pour permettre le retrait de l'ensemble de lames rotatives à partir d'un côté du boîtier ; et
   l'ensemble de lames rotatives comprend un mécanisme de dégagement configuré pour permettre le dégagement de l'ensemble de lames rotatives du mécanisme d'entraînement.

FIG. 1

FIG. 2

EP 2 955 991 B1

FIG. 3

FIG. 4

FIG. 5

FIG. 6

EP 2 955 991 B1

FIG. 7

FIG. 8

FIG. 9

FIG. 10

FIG. 11

EP 2 955 991 B1

FIG. 12

FIG. 13

EP 2 955 991 B1

FIG. 14

FIG. 15

EP 2 955 991 B1

FIG. 16

FIG. 17

FIG. 18

FIG. 19

**EP 2 955 991 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2734328 A